# EUROPEAN PATENT SPECIFICATION

(11) **EP 4 259 733 B1**
(45) Date of publication and mention of the grant of the patent: **21.10.2026**
(21) Application number: 21831458.1
(22) Date of filing: 08.12.2021
(51) Int. Cl.: C09D 11/101, C09D 11/38, C09D 11/03, B33Y 70/00, B33Y 70/10

(54) **FLAME RESISTANT BUILD MATERIALS AND ASSOCIATED PRINTED 3D ARTICLES**
FLAMMFESTE BAUMATERIALIEN UND ZUGEHÖRIGE GEDRUCKTE 3D-ARTIKEL
MATÉRIAUX DE CONSTRUCTION RÉSISTANTS À LA FLAMME ET ARTICLES ASSOCIÉS IMPRIMÉS EN 3D

(30) Priority: 10.12.2020 US 202063123739 P
(43) Date of publication of application: 18.10.2023
(73) Proprietor: 3D Systems, Inc., Rock Hill, SC 29730 (US)
(72) Inventor: MOUSSA, Khalil, Rock Hill, SC 29730 (US)
(74) Representative: dompatent
(86) International application number: PCT/US2021/062413
(87) International publication number: WO 2022/125668

(56) References cited:
- WO-A1-03/005126
- WO-A1-2011/114884
- WO-A1-2017/006173
- WO-A2-2006/107759
- US-A1- 2014 131 908
- US-A1- 2018 155 530

## Description

### CROSS REFERENCE TO RELATED APPLICATIONS

This application claims priority pursuant to 35 U.S.C. § 119 to U.S. Provisional Patent Application No. 63/123,739, filed December 10, 2020.

### FIELD

The present invention relates to three-dimensional build materials and, in particular, to polymerizable liquids imparting flame resistant or flame retardant properties to articles printed from the polymerizable liquids.

### BACKGROUND

3D printers employ build materials, which are also known as inks, to form various 3D objects, articles, or parts in accordance with computer generated files. In some instances, the build material is solid at ambient temperatures and converts to liquid at elevated jetting temperatures. In other instances, the build material is liquid at ambient temperatures.

Build materials can comprise a variety of chemical species. Selection of chemical species to include in a build material can be selected according to various considerations including, but not limited to, desired chemical and/or mechanical properties of the printed article and operating parameters of the 3D printing apparatus. For example, ultra-violet (UV) curable acrylate formulations generally can print parts with high resolution on DLP systems. However, in many cases, the resulting parts lack desirable mechanical properties and can be prone to fracture or other degradative pathways. Such degradative pathways compromise article performance, leading to premature failure.

Additionally, some build materials and resultant articles printed from the build materials can be unsuitable for high temperature applications and/or other applications necessitating combustion resistance. As a result, 3D printing technology may find limited application in fields requiring flame resistant or flame retardant materials and articles. WO 2006107759 might be cited as prior art.

### SUMMARY

In view of the foregoing, polymerizable liquids for 3D printing applications are described herein which, in some embodiments, impart flame resistant and/or flame retardant properties to articles printed from the liquids, including when such polymerizable liquids are used as a build material or ink. The polymerizable liquids may also impart desirable mechanical properties to the articles. The polymerizable liquid comprises a curable isocyanurate component in an amount of at least 20 wt.%, based on total weight of the polymerizable liquid, and an organophosphate component comprising one or more organophosphate compounds, wherein the curable isocyanurate comprises a mixture of isocyanurate polyacrylate and polyallyl isocyanurate. In some embodiments, the polymerizable liquid further comprises an acrylate component. The acrylate component can comprise acrylate monomer, acrylate oligomer, or mixtures thereof.

Additionally, methods of printing three-dimensional articles are described herein. A method, in some embodiments, comprises providing a polymerizable liquid according to claim 1. The polymerizable liquid is printed and cured to form the article. In some embodiments, the article is formed via a layer-by-layer process, wherein layer formation is administered via deposition and curing of a layer of the polymerizable liquid. In some embodiments, the polymerizable liquid also comprises an acrylate component. The acylate component can comprise acrylate monomer, acrylate oligomer, or mixtures thereof.

As described further herein, the polymerizable liquid may further comprise a photoinitiator component, and curing of the polymerizable liquid may occur by irradiation of the liquid with light of the appropriate wavelength to initial free radical polymerization.

These and other embodiments are further described in the following detailed description.

### DETAILED DESCRIPTION

Embodiments described herein can be understood more readily by reference to the following detailed description and examples.

In addition, all ranges disclosed herein are to be understood to encompass any and all subranges subsumed therein. For example, a stated range of "1.0 to 10.0" should be considered to include any and all subranges beginning with a minimum value of 1.0 or more and ending with a maximum value of 10.0 or less, e.g., 1.0 to 5.3, or 4.7 to 10.0, or 3.6 to 7.9.

All ranges disclosed herein are also to be considered to include the end points of the range, unless expressly stated otherwise. For example, a range of "between 5 and 10" should generally be considered to include the end points 5 and 10.

Further, when the phrase "up to" is used in connection with an amount or quantity, it is to be understood that the amount is at least a detectable amount or quantity. For example, a material present in an amount "up to" a specified amount can be present from a detectable amount and up to and including the specified amount.

It is also to be understood that the article "a" or "an" refers to "at least one," unless the context of a particular use requires otherwise.

The terms "three-dimensional printing system," "three-dimensional printer," "printing," and the like generally describe various solid freeform fabrication techniques for making three-dimensional articles or objects by selective deposition, jetting, fused deposition modeling, multijet modeling, and other additive manufacturing techniques now known in the art or that may be known in the future that use a build material or ink to fabricate three-dimensional objects.

### Definitions

The term "alkyl" as used herein, alone or in combination, refers to a straight or branched saturated hydrocarbon group optionally substituted with one or more substituents. For example, an alkyl can be C₁ - C₃₀ or C₁ - C₁₈, where the subscript refers to the number of carbon atoms.

The term "alkenyl" as used herein, alone or in combination, refers to a straight or branched chain hydrocarbon group having at least one carbon-carbon double bond and optionally substituted with one or more substituents.

The term "alkynyl" as used herein, alone or in combination, refers to a straight or branched chain hydrocarbon group having at least one carbon-carbon triple bond and optionally substituted with one or more substituents.

The term "aryl" as used herein, alone or in combination, refers to an aromatic monocyclic or multicyclic ring system optionally substituted with one or more ring substituents.

The term "heteroaryl" as used herein, alone or in combination, refers to an aromatic monocyclic or multicyclic ring system in which one or more of the ring atoms is an element other than carbon, such as nitrogen, boron, oxygen and/or sulfur.

The term "heterocycle" as used herein, alone or in combination, refers to a mono- or multicyclic ring system in which one or more atoms of the ring system is an element other than carbon, such as boron, nitrogen, oxygen, and/or sulfur or phosphorus and wherein the ring system is optionally substituted with one or more ring substituents. The heterocyclic ring system may include aromatic and/or non-aromatic rings, including rings with one or more points of unsaturation.

The term "heteroalkyl" as used herein, alone or in combination, refers to an alkyl moiety as defined above, having one or more carbon atoms, for example one, two or three carbon atoms, replaced with one or more heteroatoms, which may be the same or different.

The term "heteroalkenyl" as used herein, alone or in combination, refers to an alkyl moiety as defined above, having one or more carbon atoms, for example one, two or three carbon atoms, replaced with one or more heteroatoms, which may be the same or different.

The term "cycloalkyl" as used herein, alone or in combination, refers to a non-aromatic, mono- or multicyclic ring system optionally substituted with one or more ring substituents.

In one aspect, polymerizable liquids for use in 3D printing applications are described herein. The polymerizable liquids, for example, can be employed in digital light processing (DLP), stereolithography (SLA), and multi-jet printing (MJP) printing applications, in some embodiments. The polymerizable liquid comprises a curable isocyanurate component in an amount of at least 20 wt.% based on total weight of the polymerizable liquid, and an organophosphate component comprising one or more organophosphate compounds, wherein the curable isocyanurate component comprises a mixture of isocyanurate polyacrylate and polyallyl isocyanurate.

Turning now to specific components, the curable isocyanurate component can comprise any curable isocyanurate not inconsistent with the technical objectives described herein. The curable isocyanurate comprises a mixture of isocyanurate species.

Curable isocyanurates comprise at least one moiety or functionality operable to participate in the polymerization process. In some embodiments, the isocyanurate can comprise a plurality of polymerizable moieties or functionalities. A "polymerizable moiety," for reference purposes herein, comprises a moiety that can be polymerized or cured to provide a printed 3D article or object. Such polymerizing or curing can be carried out in any manner not inconsistent with the objectives of the present disclosure. Polymerizable moieties or functionalities can comprise those operable to undergo non-radiative induced polymerization mechanisms, including polycondensation or reaction between isocyanate and hydroxyl, for example. In some embodiments, the curable isocyanurate can comprise one or more reactive functionalities including, but not limited to, epoxy, amine, and thiol. Alternatively, one or more polymerizable functionalities can comprise one or more points of unsaturation suitable for free radical polymerization. The isocyanurate according to claim 1 is a mixture of isocyanurate polyacrylate and polyallyl isocyanurate. In some embodiments, an isocyanurate polyacrylate is of Formula I: 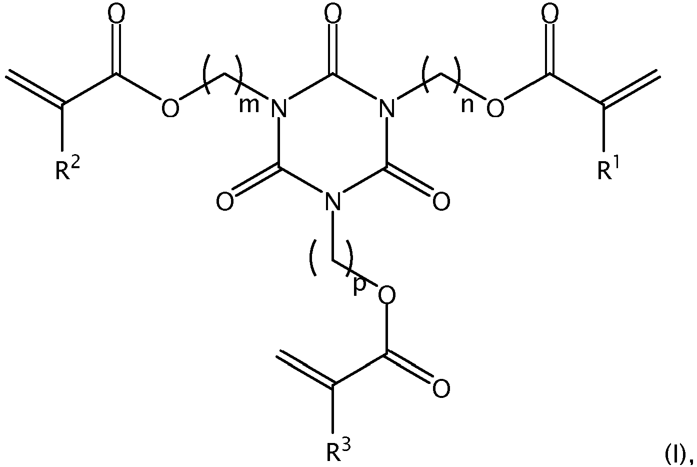 wherein R¹-R³ are each independently selected from the group consisting of hydrogen and alkyl and m, n, and p are each integers independently ranging from 1 to 10.

A polyallyl isocyanurate, in some embodiments, is of Formula II: 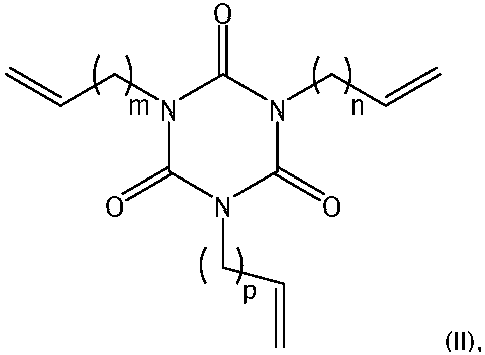 wherein m, n, and p are integers independently ranging from 1 to 10.

In some embodiments, the curable isocyanurate is present in an amount of 30-80 wt.% or 35-70 wt.%, based on total weight of the polymerizable liquid.

In addition to the curable isocyanurate component, the polymerizable liquid comprises an organophosphate component comprising one or more organophosphate compounds. Any organophosphate consistent with imparting flame resistant or flame retardant properties to polymerizable liquids and articles printed from the polymerizable liquids can be employed.

In some embodiments, the one or more organophosphate compounds fall under the following formula, Formula III: 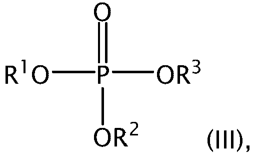 wherein R¹-R³ are each independently selected from the group consisting of hydrogen, alkyl, alkenyl, alkynyl, cycloalkyl, heteroalkyl, heteroalkenyl, heterocyclyl, aryl, and heteroaryl. In some embodiments, for example, the one or more organophosphate compounds comprise aryl phosphate or heteroaryl phosphate. Aryl phosphates, in some embodiments, can include triphenyl phosphate. Moreover, in some embodiments, the one or more phosphates comprise bis(organophospates). Bis(organophosphates) can include resorcinol bis(diphenyl phosphate), bisphenol A bis(diphenyl phosphate) or mixtures thereof, in some embodiments.

Organophospate compounds of the polymerizable liquid, in some embodiments, are not halogenated. The organophosphate compounds, for example, are not halogenated with fluorine, chlorine, or bromine.

The organophosphate component can be present in the polymerizable liquid in any desired amount. In some embodiments, the organophosphate component is present in an amount of 10-40 wt.% or 20-40 wt.% based on total weight of the polymerizable liquid.

As described herein, the polymerizable liquid can further comprise an acrylate component in addition to the curable isocyanurate and organphosphate component. The acrylate component can comprise one or a mixture of light polymerizable acrylate species. In some embodiments, for example, the acrylate component can comprise acrylate monomer, acrylate oligomer, or mixtures thereof. As known to the skilled artisan, a monomer is a single structural unit of a polymer or copolymer and is not an oligomer or polymer. In contrast, an oligomer comprises a plurality of chemically linked monomers. In some embodiments, the acrylate component can comprise monofunctional acrylates, difunctional acrylates, or mixtures thereof. In some embodiments, for instance, the acrylate component comprises methyl (meth)acrylate, ethyl (meth)acrylate, n-propyl (meth)acrylate, n-butyl (meth)acrylate, isobutyl (meth)acrylate, n-hexyl (meth)acrylate, 2-ethylhexyl (meth)acrylate, n-octyl (meth)acrylate, n-decyl (meth)acrylate, n-dodecyl (meth)acrylate, 2-hydroxyethyl (meth)acrylate, 2- or 3-hydroxypropyl (meth)acrylate, 2-methoxyethyl (meth)acrylate, 2-ethoxyethyl (meth)acrylate, 2- or 3-ethoxypropyl (meth)acrylate, tetrahydrofurfuryl methacrylate, isobornyl (meth)acrylate, 2-(2-ethoxyethoxy)ethyl acrylate, cyclohexyl methacrylate, 2-phenoxyethyl acrylate, glycidyl acrylate, isodecyl acrylate, 2-phenoxyethyl (meth)acrylate, lauryl methacrylate, or mixtures thereof. In some embodiments, the acrylate component comprises a monofunctional or difunctional aliphatic urethane (meth)acrylate.

The acrylate component, in some embodiments, can comprise one or more of allyl acrylate, allyl methacrylate, triethylene glycol di(meth)acrylate, tricyclodecane dimethanol diacrylate, and cyclohexane dimethanol diacrylate. Additionally, in some embodiments, the acrylate component comprises diacrylate and/or dimethacrylate esters of aliphatic, cycloaliphatic or aromatic diols, including 1,3- or 1,4-butanediol, neopentyl glycol, 1,6-hexanediol, diethylene glycol, triethylene glycol, tetraethylene glycol, polyethylene glycol, tripropylene glycol, ethoxylated or propoxylated neopentyl glycol, 1,4-dihydroxymethylcyclohexane, 2,2-bis(4-hydroxycyclohexyl)propane or bis(4-hydroxycyclohexyl)methane, hydroquinone, 4,4'-dihydroxybiphenyl, bisphenol A, bisphenol F, bisphenol S, ethoxylated or propoxylated bisphenol A, ethoxylated or propoxylated bisphenol F or ethoxylated or propoxylated bisphenol S.

Additional non-limiting examples of species suitable for inclusion in the acrylate component comprise the following: isobornyl acrylate (IBOA), commercially available from SARTOMER under the trade name SR 506A; difunctional acrylate commercially available from SARTOMER under the SR 833S trade designation; trifunctional acrylate monomer commercially available from SARTOMER under the SR 533 trade designation; isobornyl methacrylate, commercially available from SARTOMER under the trade name SR 423A; alkoxylated tetrahydrofurfuryl acrylate, commercially available from SARTOMER under the trade name SR 611; monofunctional urethane acrylate, commercially available from RAHN USA under the trade name GENOMER 1122; aliphatic urethane diacrylate, commercially available from ALLNEX under the trade name EBECRYL 8402; difunctional aliphatic urethane (meth)acrylate, commercially available from DYMAX under the BR-952 trade designation; triethylene glycol diacrylate, commercially available from SARTOMER under the trade name SR 272; and triethylene glycol dimethacrylate, commercially available from SARTOMER under the trade name SR 205. Other commercially available curable components may also be used. In addition, in some cases, a monofunctional or difunctional acrylate comprises an aliphatic polyester urethane acrylate oligomer, a urethane (meth)acrylate resin, and/or an acrylate amine oligomeric resin, such as EBECRYL 7100. In some embodiments, the acrylate component comprises one or more acrylate derivatives such as acryloylmorpholine.

In addition to the monofunctional and difunctional acrylate species components described above, it is also possible, in some cases, to include trifunctional or higher functional acrylate species in a polymerizable liquid described herein. For example, in some instances, one or more tri(meth)acrylates may be used. However, it is to be understood that the functionality (i.e., mono-, di-, tri-, or higher functionality) and the molecular weight of the acrylate species described herein can be selected to provide a build material having a viscosity suitable for use in a desired 3D printing system. Non-limiting examples of trifunctional or higher (meth)acrylates that may be suitable for use in some embodiments described herein include 1,1-trimethylolpropane tri(meth)acrylate, ethoxylated or propoxylated 1,1,1-trimethylolpropanetri(meth)acrylate, ethoxylated or propoxylated glycerol tri(meth)acrylate, pentaerythritol monohydroxy tri(meth)acrylate, dipentaerythritol monohydroxy penta(meth)acrylate, bis(trimethylolpropane) and tetra(meth)acrylate.

The acrylate component can be present in the polymerizable liquid in any amount consistent with the objectives described herein. In some embodiments, the acrylate component is present in an amount in an amount up to about 70 wt. %. For example, the acrylate component can be present in an amount of 30-70 wt.%, or 40-60 wt.%, based on total weight of the polymerizable liquid.

A polymerizable liquid described herein, in some embodiments, can further comprise a photoinitiator component for initiating polymerization of one or more components of the liquid upon exposure to light of the proper wavelength. In some embodiments, the photoinitiator component can initiate polymerization of the isocyanurate comprising one or more moieties polymerizable via free radical mechanisms, such as the isocyanurate acrylate. Similarly, a photoinitiator can be employed to polymerize the acrylate component. In some embodiments, the curable isocyanurate can be copolymerized with the acrylate component. In other embodiments, the curable isocyanurate and acrylate component are polymerized independently.

Any photoinitiator not inconsistent with the objectives of the present disclosure can be used. In some embodiments, a photoinitiator comprises an alpha-cleavage type (unimolecular decomposition process) photoinitiator or a hydrogen abstraction photosensitizer-tertiary amine synergist, operable to absorb light preferably between about 250 nm and about 420 nm or between about 300 nm and about 385 nm, to yield free radical(s).

Examples of alpha cleavage photoinitiators are Irgacure 184 (CAS 947-19-3), Irgacure 369 (CAS 119313-12-1), and Irgacure 819 (CAS 162881-26-7). An example of a photosensitizer-amine combination is Darocur BP (CAS 119-61-9) with diethylaminoethylmethacrylate.

In addition, in some instances, suitable photoinitiators comprise benzoins, including benzoin, benzoin ethers, such as benzoin methyl ether, benzoin ethyl ether and benzoin isopropyl ether, benzoin phenyl ether and benzoin acetate, acetophenones, including acetophenone, 2,2-dimethoxyacetophenone and 1,1-dichloroacetophenone, benzil, benzil ketals, such as benzil dimethyl ketal and benzil diethyl ketal, anthraquinones, including 2-methylanthraquinone, 2-ethylanthraquinone, 2-tert-butylanthraquinone, 1-chloroanthraquinone and 2-amylanthraquinone, triphenylphosphine, benzoylphosphine oxides, for example 2,4,6-trimethylbenzoyldiphenylphosphine oxide (Lucirin TPO), benzophenones, such as benzophenone and 4,4'-bis(N,N'-dimethylamino)benzophenone, thioxanthones and xanthones, acridine derivatives, phenazine derivatives, quinoxaline derivatives or 1-phenyl-1,2-propanedione, 2-O-benzoyl oxime, 1-aminophenyl ketones or 1-hydroxyphenyl ketones, such as 1-hydroxycyclohexyl phenyl ketone, phenyl 1-hydroxyisopropyl ketone and 4-isopropylphenyl 1 -hydroxyisopropyl ketone.

Suitable photoinitiators can also comprise those operable for use with a HeCd laser radiation source, including acetophenones, 2,2-dialkoxybenzophenones and 1-hydroxyphenyl ketones, such as 1-hydroxycyclohexyl phenyl ketone or 2-hydroxyisopropyl phenyl ketone (=2-hydroxy-2,2-dimethylacetophenone). Additionally, in some cases, suitable photoinitiators comprise those operable for use with an Ar laser radiation source including benzil ketals, such as benzil dimethyl ketal. In some embodiments, a photoinitiator comprises an α-hydroxyphenyl ketone, benzil dimethyl ketal or 2,4,6-trimethylbenzoyldiphenylphosphine oxide or a mixture thereof.

Another class of suitable photoinitiators, in some instances, comprises ionic dye-counter ion compounds capable of absorbing actinic radiation and generating free radicals for polymerization initiation. In some embodiments, polymerizable liquids containing ionic dye-counter ion compounds can be polymerized upon exposure to visible light within the adjustable wavelength range of about 400 nm to about 700 nm. Ionic dye-counter ion compounds and their mode of operation are disclosed in EP-A-0 223 587 and U.S. Pat. Nos. 4,751,102; 4,772,530; and 4,772,541.

A photoinitiator can be present in a polymerizable liquid described herein in any amount not inconsistent with the objectives of the present disclosure. In some embodiments, a photoinitiator is present in an amount of up to about 5 wt. %, based on the total weight of the polymerizable liquid. In some cases, a photoinitiator is present in an amount ranging from about 0.1 wt. % to about 5 wt. %.

Moreover, in some embodiments, a polymerizable liquid described herein can further comprise one or more sensitizers. A sensitizer can be added to increase the effectiveness of one or more photoinitiators that may also be present. Any sensitizer not inconsistent with the objectives of the present disclosure may be used. In some cases, a sensitizer comprises isopropylthioxanthone (ITX) or 2-chlorothioxanthone (CTX).

A sensitizer can be present in the polymerizable liquid in any amount not inconsistent with the objectives of the present disclosure. In some embodiments, a sensitizer is present in an amount ranging from about 0.1 wt. % to about 2 wt. % or from about 0.5 wt. % to about 1 wt. %, based on the total weight of the polymerizable liquid.

In some embodiments, one or more UV-absorbers and/or light stabilizers can be present in the polymerizable liquid. In some embodiments, for example, one or more UV-absorbers and/or light stabilizers can be present in an amount of 0.1 -2 wt.%, based on the total weight of the polymerizable liquid. In some embodiments, UV-absorbers and/or light stabilizers are commercially available from BASF of Florham Park, New Jersey under the TINUVIN^{®} trade-designation.

In another aspect, methods of printing a 3D article or object are described herein. Methods of printing a 3D article or object can include forming the 3D article from a plurality of layers of a polymerizable liquid described herein in a layer-by-layer manner. Any polymerizable liquid or component described herein may be used in the fabrication of the article by additive manufacturing.

A method comprises providing a polymerizable liquid according to claim 1 The polymerizable liquid is printed and cured to form the article. In some embodiments, the polymerizable liquid also comprises an acrylate component. The acrylate component can comprise acrylate monomer, acrylate oligomer, or mixtures thereof.

As described further herein, the polymerizable liquid may further comprise a photoinitiator component, and curing of the polymerizable liquid may occur by irradiation of the liquid with light of the appropriate wavelength to initial free radical polymerization.

In some embodiments, layers of polymerizable liquids can be deposited according to an image of the 3D article in a computer readable format during formation of the three-dimensional article. The polymerizable liquid can be deposited according to preselected computer aided design (CAD) parameters. Moreover, in some cases, one or more layers of the polymerizable liquid described herein has a thickness of about 10 µm to about 100 µm, about 10 µm to about 80 µm, about 10 µm to about 50 µm, about 20 µm to about 100 µm, about 20 µm to about 80 µm, or about 20 µm to about 40 µm. Other thicknesses are also possible.

Additionally, it is to be understood that methods of printing a 3D article described herein can include so-called "multi-jet" or "stereolithography" 3D printing methods. For example, in some instances, a multi-jet method of printing a 3D article comprises selectively depositing layers of a polymerizable liquid described herein onto a substrate, such as a build pad of a 3D printing system. In addition, in some embodiments, a method described herein further comprises supporting at least one of the layers of the polymerizable liquid with a support material. Any support material not inconsistent with the objectives of the present disclosure may be used.

It is also possible to form a 3D article from a polymerizable liquid described herein using stereolithography. For example, in some cases, a method of printing a 3D article comprises retaining the polymerizable liquid in a container and selectively applying energy to the polymerizable liquid in the container to solidify at least a portion of a polymerizable liquid, thereby forming a solidified layer that defines a cross-section of the 3D article. Additionally, a method described herein can further comprise raising or lowering the solidified layer to provide a new or second layer of polymerizable liquid, followed by again selectively applying energy to the polymerizable liquid in the container to solidify at least a portion of the new or second polymerizable liquid that defines a second cross-section of the 3D article. Further, the first and second cross-sections of the 3D article can be bonded or adhered to one another in the z-direction (or build direction corresponding to the direction of raising or lowering recited above) by the application of the energy for solidifying the polymerizable liquid. Moreover, selectively applying energy to the polymerizable liquid in the container can comprise applying electromagnetic radiation, such as UV and/or visible radiation, having a sufficient energy to initiate polymerization of the polymerizable material as described herein. In addition, in some cases, raising or lowering a solidified layer of polymerizable liquid is carried out using an elevator platform disposed in the container of fluid build material. A method described herein can also comprise planarizing a new layer of polymerizable liquid provided by raising or lowering an elevator platform. Such planarization can be carried out, in some cases, by a wiper or roller.

Articles printed according to methods described herein can exhibit one or more desirable mechanical properties. 3D articles printed from polymerizable liquids described herein may display a tensile modulus of at 2700-3200 MPa, in some embodiments. A 3D printed article, in some embodiments, can exhibit a tensile strength of at least 55-65 MPa. Values for tensile strength and tensile modulus provided herein can be determined according to ASTM D638.

Articles printed according to methods described herein can also exhibit desirable flame resistant and/or flame retardant properties. The articles, for example, can exhibit a limiting oxygen index (LOI) of 25-30% or 28-30% according to ISO 4589. Additionally, articles printed according to methods described herein can be compliant with the provisions of 14 C.F.R. § 23.2325.

These foregoing embodiments are further illustrated in the following non-limiting examples.

### EXAMPLES

Table 1 provides a formulation of a polymerizable liquid according to some embodiments described herein.

**Table 1 - Polymerizable Liquid**

| **Component** | **Formula 1** |
|---|---|
| Difunctional urethane acrylate | 16 |
| Polyacrylate isocyanurate | 27.2 |
| Difunctional acrylate | 7.2 |
| Polyallyl isocyanurate | 27.2 |
| Bis(diphenyl phosphate) | 20 |
| Photoinitiator | 2.4 |
| **Total % weight** | **100.0** |

Three rectangular strips each having thickness of 3 mm were printed from the polymerizable liquid of Formula 1. The strips had sufficient length and width for vertical flame testing in compliance the 14 C.F.R. § 23.2325. Burn length is the distance from the original edge to the farthest evidence of damage to the test specimen due to flame impingement, including areas of partial or complete consumption, charring, or embrittlement, but not including areas sooted, stained, warped, or discolored, nor areas where material has shrunk or melted from the heat source. Acceptance or pass criteria are as follows:
Afterflame: 15.0 seconds maximum average
Drip Burn: 5.0 seconds maximum average
Burn Length: 8.0 inches maximum average

The results of the vertical flame testing for the three sample strips is provided in Table 2:

**Table 2 - Vertical Flame Test Results**

| Sample | Afterflame (seconds) | Drip Burn (seconds) | Burn Length (inches) |
|---|---|---|---|
| 1 | 0.8 | 0 | 0.1 |
| 2 | 0.7 | 0 | 0.1 |
| 3 | 0.8 | 0 | 0.1 |
| Average | 0.8 | 0 | 0.1 |

As provided in Table 2, the printed samples passed the vertical flame test, exhibiting substantial flame resistance.

## Claims

1. A polymerizable liquid comprising:
a curable isocyanurate component in an amount of at least 20 wt.%, based on total weight of the polymerizable liquid; and
an organophosphate component comprising one or more organophosphate compounds,
wherein the curable isocyanurate component comprises a mixture of isocyanurate polyacrylate and polyallyl isocyanurate.

2. The polymerizable liquid of claim 1, wherein the curable isocyanurate component is polymerizable via free radical polymerization.

3. The polymerizable liquid of claim 1, wherein the isocyanurate polyacrylate is of Formula I: 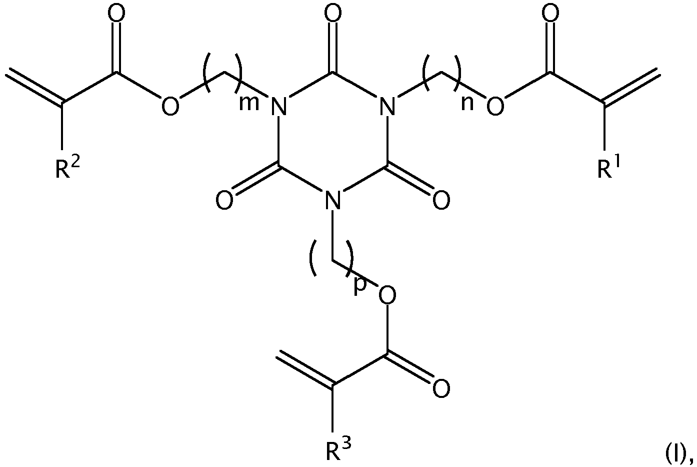
wherein R¹-R³ are each independently selected from the group consisting of hydrogen and alkyl and m, n, and p are each integers independently ranging from 1 to 10, or
wherein the polyallyl isocyanurate is of Formula II: 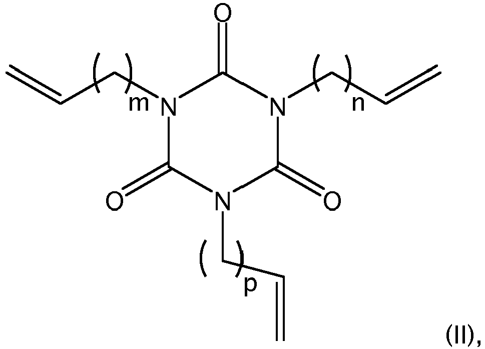
wherein m, n, and p are integers independently ranging from 1 to 10.

4. The polymerizable liquid of claim 1, wherein the organophosphate component is present in an amount of 10-40 wt.%, based on total weight of the polymerizable liquid.

5. The polymerizable liquid of claim 1, wherein the one or more organophosphate compounds are of the formula: 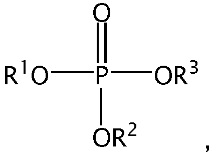 wherein R¹-R³ are independently selected from the group consisting of hydrogen, alkyl, alkenyl, alkynyl, cycloalkyl, heteroalkyl, heteroalkenyl, heterocyclyl, aryl, and heteroaryl.

6. The polymerizable liquid of claim 1, wherein the one or more organophosphate compounds comprise bis(organophosphate).

7. The polymerizable liquid of claim 1, wherein the curable isocyanurate component is present in an amount of 30-80 weight percent, based on total weight of the polymerizable liquid.

8. The polymerizable liquid of claim 1 further comprising an acrylate component.

9. The polymerizable liquid of claim 8, wherein the acrylate component is present in an amount of 30-70 wt.% based on total weight of the polymerizable liquid.

10. The polymerizable liquid of claim 8, wherein the acrylate component comprises a mixture of acrylate monomer and acrylate oligomer.

11. The polymerizable liquid of claim 1 further comprising a photoinitiator component, preferably the photoinitiator component is present in an amount of 0.1-5 weight percent, based on total weight of the polymerizable liquid.

12. A method of printing a three-dimensional article comprising:
providing a polymerizable liquid according to any one of claims 1 to 11; and
printing and curing the polymerizable liquid with light to form the article.

13. The method of claim 12, wherein the article has a limiting oxygen index of 25-30% according to ISO 4589.

14. The method of claim 12, wherein the article has a limiting oxygen index of 28-30% according to ISO 4589.

15. The method of claim 12, wherein the polymerizable liquid is provided in a layer-by-layer process.

## Patentansprüche

1. Polymerisierbare Flüssigkeit, umfassend:
eine härtbare Isocyanuratkomponente in einer Menge von wenigstens 20 Gew.-%, bezogen auf das Gesamtgewicht der polymerisierbaren Flüssigkeit; und
eine Organophosphatkomponente, die eine oder mehrere Organophosphatverbindungen umfasst,
wobei die härtbare Isocyanuratkomponente ein Gemisch von Isocyanuratpolyacrylat und Polyallylisocyanurat umfasst.

2. Polymerisierbare Flüssigkeit gemäß Anspruch 1, wobei die härtbare Isocyanuratkomponente durch radikalische Polymerisation polymerisierbar ist.

3. Polymerisierbare Flüssigkeit gemäß Anspruch 1, wobei das Isocyanuratpolyacrylat der Formel I entspricht: 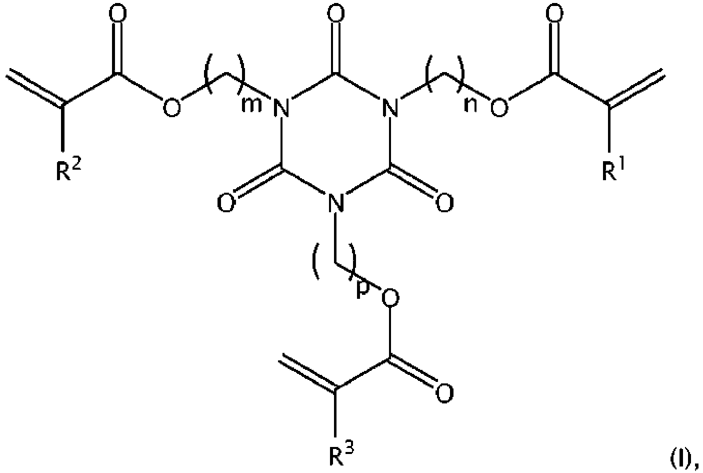 wobei R¹-R³ jeweils unabhängig aus der Gruppe ausgewählt sind, die aus Wasserstoff und Alkyl besteht, und m, n und p jeweils ganze Zahlen sind, die unabhängig im Bereich von 1 bis 10 liegen, oder
wobei das Polyallylisocyanurat der Formel II entspricht: 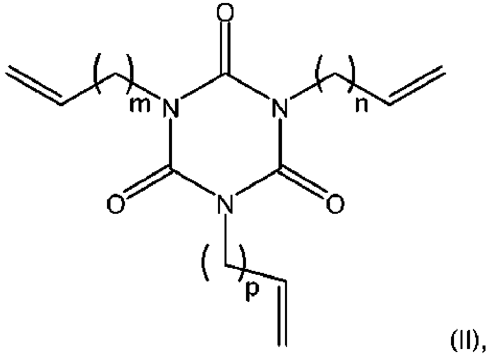 wobei m, n und p jeweils ganze Zahlen sind, die unabhängig im Bereich von 1 bis 10 liegen.

4. Polymerisierbare Flüssigkeit gemäß Anspruch 1, wobei die Organophosphatkomponente in einer Menge von 10-40 Gew.-% vorhanden ist, bezogen auf das Gesamtgewicht der polymerisierbaren Flüssigkeit.

5. Polymerisierbare Flüssigkeit gemäß Anspruch 1, wobei die eine oder die mehreren Organophosphatverbindungen der folgenden Formel entsprechen: 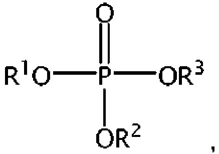 wobei R¹-R³ unabhängig aus der Gruppe ausgewählt sind, die aus Wasserstoff, Alkyl, Alkenyl, Alkinyl, Cycloalkyl, Heteroalkyl, Heteroalkenyl, Heterocyclyl, Aryl und Heteroaryl besteht.

6. Polymerisierbare Flüssigkeit gemäß Anspruch 1, wobei die eine oder die mehreren Organophosphatverbindungen Bis(organophosphat) umfassen.

7. Polymerisierbare Flüssigkeit gemäß Anspruch 1, wobei die härtbare Isocyanuratkomponente in einer Menge von 30-80 Gewichtsprozent vorhanden ist, bezogen auf das Gesamtgewicht der polymerisierbaren Flüssigkeit.

8. Polymerisierbare Flüssigkeit gemäß Anspruch 1, ferner umfassend eine Acrylatkomponente.

9. Polymerisierbare Flüssigkeit gemäß Anspruch 8, wobei die Acrylatkomponente in einer Menge von 30-70 Gew.-% vorhanden ist, bezogen auf das Gesamtgewicht der polymerisierbaren Flüssigkeit.

10. Polymerisierbare Flüssigkeit gemäß Anspruch 8, wobei die Acrylatkomponente ein Gemisch von Acrylatmonomer und Acrylatoligomer umfasst.

11. Polymerisierbare Flüssigkeit gemäß Anspruch 1, ferner umfassend eine Photoinitiatorkomponente, wobei vorzugsweise die Photoinitiatorkomponente in einer Menge von 0,1-5 Gew.-% vorhanden ist, bezogen auf das Gesamtgewicht der polymerisierbaren Flüssigkeit.

12. Verfahren zum Drucken eines dreidimensionalen Artikels, umfassend:
das Bereitstellen einer polymerisierbaren Flüssigkeit gemäß einem der Ansprüche 1 bis 11; und
das Drucken und Aushärten der polymerisierbaren Flüssigkeit mit Licht unter Bildung des Artikels.

13. Verfahren gemäß Anspruch 12, wobei der Artikel einen Sauerstoffindex von 25-30% gemäß ISO 4589 aufweist.

14. Verfahren gemäß Anspruch 12, wobei der Artikel einen Sauerstoffindex von 28-30% gemäß ISO 4589 aufweist.

15. Verfahren gemäß Anspruch 12, wobei die polymerisierbare Flüssigkeit in einem schichtweisen Verfahren bereitgestellt wird.

## Revendications

1. Liquide polymérisable, comprenant :
un composant isocyanurate durcissable en une quantité d'au moins 20 % en poids, par rapport au poids total du liquide polymérisable ; et
un composant organophosphate, comprenant un ou plusieurs composés organophosphates,
dans lequel ledit composant isocyanurate durcissable comprend un mélange de polyacrylate d'isocyanurate et de polyallyl-isocyanurate.

2. Liquide polymérisable selon la revendication 1, dans lequel le composant isocyanurate durcissable est polymérisable par polymérisation radicalaire.

3. Liquide polymérisable selon la revendication 1, dans lequel le polyacrylate d'isocyanurate répond à la formule I : 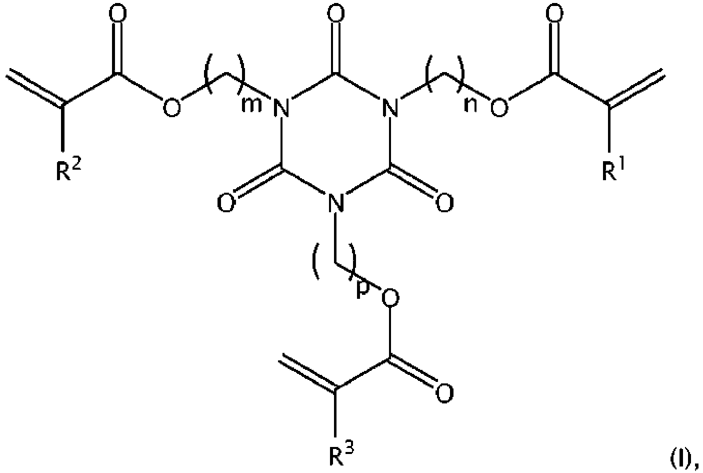 où R¹-R³ sont chacun indépendamment choisis dans le groupe consistant en hydrogène et alkyle, et m, n et p sont chacun des nombres entiers compris indépendamment entre 1 et 10, ou
dans lequel le polyallyl-isocyanurate répond à la formule II : 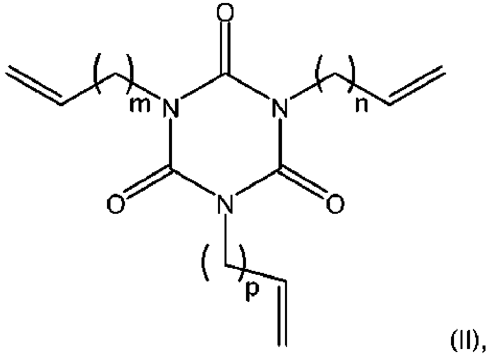 où m, n et p sont des nombres entiers compris indépendamment entre 1 et 10.

4. Liquide polymérisable selon la revendication 1, dans lequel le composant organophosphate est présent en une quantité de 10-40 % en poids, par rapport au poids total du liquide polymérisable.

5. Liquide polymérisable selon la revendication 1, dans lequel le ou les composés organophosphates répondent à la formule : 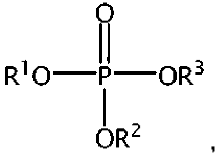 où R¹-R³ sont choisis indépendamment dans le groupe consistant en hydrogène, alkyle, alcényle, alcynyle, cycloalkyle, hétéroalkyle, hétéro-alcényle, hétérocyclyle, aryle et hétéroaryle.

6. Liquide polymérisable selon la revendication 1, dans lequel le ou les composés organophosphates comprennent un bis(organophosphate).

7. Liquide polymérisable selon la revendication 1, dans lequel le composant isocyanurate durcissable est présent en une quantité de 30-80 % en poids, par rapport au poids total du liquide polymérisable.

8. Liquide polymérisable selon la revendication 1, comprenant en outre un composant acrylate.

9. Liquide polymérisable selon la revendication 8, dans lequel le composant acrylate est présent en une quantité de 30-70 % en poids, par rapport au poids total du liquide polymérisable.

10. Liquide polymérisable selon la revendication 8, dans lequel le composant acrylate comprend un mélange de monomère acrylate et d'oligomère acrylate.

11. Liquide polymérisable selon la revendication 1, comprenant en outre un composant photo-initiateur, le composant photo-initiateur étant de préférence présent en une quantité de 0,1-5 % en poids, par rapport au poids total du liquide polymérisable.

12. Procédé pour imprimer un article tridimensionnel, comprenant les étapes consistant à :
fournir un liquide polymérisable selon l'une quelconque des revendications 1 à 11 ; et
imprimer et durcir le liquide polymérisable par exposition à la lumière pour former l'article.

13. Procédé selon la revendication 12, dans lequel ledit article présente un indice limite d'oxygène de 25 à 30 % selon la norme ISO 4589.

14. Procédé selon la revendication 12, dans lequel ledit article présente un indice limite d'oxygène de 28 à 30 % selon la norme ISO 4589.

15. Procédé selon la revendication 12, dans lequel le liquide polymérisable est fourni selon un procédé couche par couche.
